# EUROPEAN PATENT SPECIFICATION

(11) **EP 3 072 243 B1**
(45) Date of publication and mention of the grant of the patent: **24.10.2018**
(21) Application number: 14812047.0
(22) Date of filing: 17.11.2014
(51) Int. Cl.: H04B 1/3827, H04M 1/725, H04W 52/36

(54) **OBJECT DETECTION AND CHARACTERIZATION**
OBJEKTERKENNUNG UND -CHARAKTERISIERUNG
DÉTECTION ET CARACTÉRISATION D'OBJET

(30) Priority: 21.11.2013 US 201314086866
(43) Date of publication of application: 28.09.2016
(73) Proprietor: Microsoft Technology Licensing, LLC, Redmond, WA 98052 (US)
(72) Inventor: STANDING, William H., Redmond, WA 98052-6399 (US)
(74) Representative: Goddar, Heinz J.
(86) International application number: PCT/US2014/065856
(87) International publication number: WO 2015/077160

(56) References cited:
- EP-A1- 2 410 661
- US-A1- 2012 190 398
- US-A1- 2012 214 422

## Description

### BACKGROUND

Wireless functionality may be found in an ever expanding variety of different types of devices. For example, mobile communications devices such as mobile phones, tablet computers, portable gaming and music devices, and so on may include a radio device to perform wireless communication with another communication device directly, indirectly via the Internet, and so on. Thus, use of the radio device for wireless communication may support a wide variety of functionality for use by the mobile communications device.

However, due to configuration of the device for mobile use, the mobile communications device may be in close proximity to a user, such as by being held by one or both hands of the user. Consequently, biological tissue of a user may be heated by radio waves that may be encountered close to the antenna. Conventional techniques that were developed to address this issue, however, typically limited overall operation of the radio device, which could cause a decrease in range and therefore usefulness of the radio device as well as the mobile communications device as a whole.

US2012214422 discloses an apparatus for satisfying Specific Absorption Rate (SAR) compliance criteria comprising a processor configured to receive a first capacitance measurement from a first capacitance sensor, receive a second capacitance measurement from a second capacitance sensor, determine a relative proximity of a human body to a wireless device based on the first capacitance measurement and the second capacitance measurement, and adjust a radio frequency (RF) transceiver's output power from a first output power limit to a second output power limit based on the determined relative proximity.

EP2410661 discloses a radiation power level control scheme for a wireless user equipment (UE) device, wherein a component of the UE device is configured to determine a time-average transmission power level and another component is configured to compare the time-average transmission power level with a first time-averaged transmission power limit threshold, the first time-averaged transmission power limit threshold having a value that depends on a transmission power data history for the UE device.

US2012190398 discloses a method including using a measurement antenna in a wireless device, determining whether a user is proximate the wireless device at least by transmitting a signal using the measurement antenna; in response to a determination the user is not proximate the wireless device, transmitting the signal using a main antenna at a normal transmit power; and in response to a determination the user is proximate the wireless device, transmitting the signal using the main antenna at a limited transmit power.

### SUMMARY

Object detection and characterization techniques are described. In one or more implementations, capacitance changes are detected by one or more of a plurality of capacitive sensors of a computing device. A material composition or movement of an object in relation to the computing device is determined that caused the capacitance changes detected by the one or more capacitive sensors. Operation of a radio device is managed such that an amount of energy emitted by the radio device is based at least in part on the determination.

In one or more implementations, a history of inputs detected using one or more sensors of a mobile communications device is stored. The history describes a range, direction, and likely material composition of an object over time in relation to the mobile communications device. An amount of energy that is permitted to be emitted by a radio device of the mobile communications device is adjusted based on the stored history.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The invention is set out in the appended set of claims.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items.
FIG. 1 is an illustration of an environment in an example implementation that is operable to implement object detection and characterization techniques described herein.
FIG. 2 depicts a system in an example implementation in which an array of capacitive sensors are shown.
FIG. 3 depicts an example implementation in which sensing of an object in three dimensions is shown.
FIG. 4 depicts an example implementation in which a layered arrangement of sensors is shown.
FIG. 5 depicts an example implementation in which a history is generated that describes an output collected from one or more sensors.
FIG. 6 depicts a system in an example implementation in which movement of a computing device is also utilized to manage an amount of energy emitted by a radio device.
FIG. 7 is a flow diagram depicting a procedure in an example implementation in which object detection is utilized to manage operation of a radio device.
FIG. 8 is a flow diagram depicting a procedure in an example implementation in which a history of detected inputs is utilized to adjust an amount of energy emitted by a radio device of a mobile computing device.
FIG. 9 illustrates various components of an example device that can be implemented as any type of computing device as described with reference to FIGS. 1-8 to implement embodiments of the techniques described herein.

### DETAILED DESCRIPTION

### Overview

Specific absorption rate (SAR) techniques have been implemented to help limit an amount of exposure a user may experience from energy transmitted by a radio device, such as for use to connect to a wireless network. Conventional techniques, however, typically addressed this exposure by limiting an output of a radio device, regardless of whether a user was even located near the device. Consequently, limitations in range could be encountered regardless of whether the user is exposed to this energy.

Object detection and characterization techniques are described. In one or more implementations, sensors are utilized to detect proximity of an object. Additionally, the sensors may also be configured to detect a material composition of the object, such as whether the object includes biological tissue. This information may therefore be used to manage an amount of energy output by a radio device of the mobile communications device. In this way, the mobile communications device may protect a potential user yet support an increased range when a potential user in not in danger of being exposed to the energy.

Other techniques are also contemplated to assist in management of energy emitted by a radio device. For example, the sensors may also be configured to detect location and range of the object. This information may be used to generate a history over a period of time that describes a relationship of the object to the mobile communications device. The sensors may also be configured to detect location of the mobile communications device itself in space, which may also be utilized to generate a history of movement (and lack thereof) of the mobile communications device. The information from either of both of these sources may then be leveraged to also manage operation of a radio device and more particularly an amount of energy emitted by the device. Thus, the mobile communications device may leverage a wide variety of information such as range, location, material composition, and positioning of an object and/or a mobile communications device itself to comply with one or more specific absorption rate (SAR) regulations and guidelines. Further discussion of these and other techniques may be found in relation to the following sections.

In the following discussion, an example environment is first described that may employ the techniques described herein. Example procedures are then described which may be performed in the example environment as well as other environments. Consequently, performance of the example procedures is not limited to the example environment and the example environment is not limited to performance of the example procedures. Further, although management of an amount of energy by a radio device is described, any other device that emits energy may also leverage these techniques without departing from the scope thereof. Thus, although these techniques are described as a boon to appropriate radio throttling, exposing near field objects' position, relative to the device, and material characteristics more generally may be useful to other processes and applications.

### Example Environment

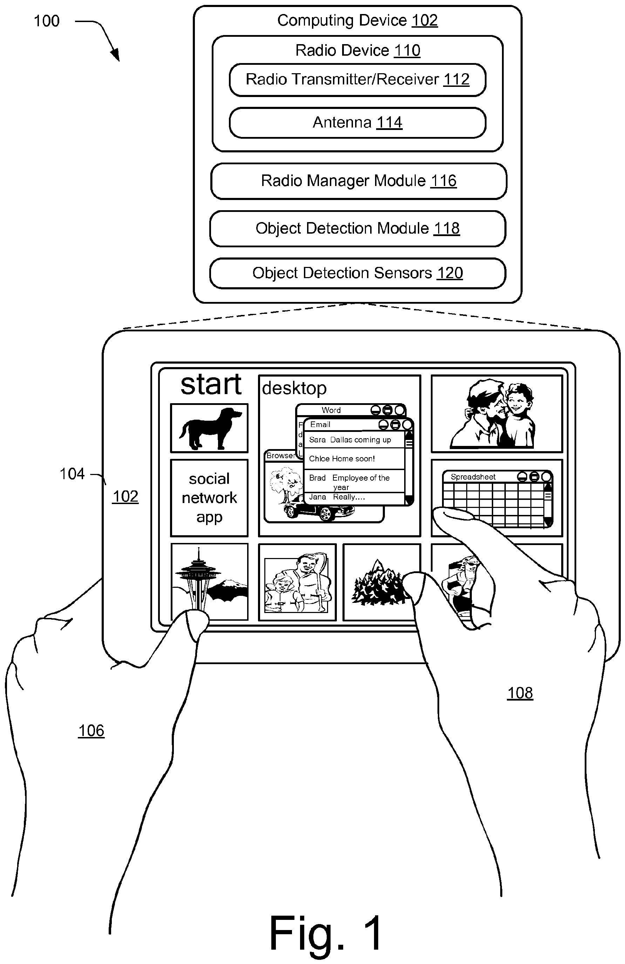

FIG. 1 is an illustration of an environment 100 in an example implementation that is operable to employ object detection and characterization techniques described herein. The illustrated environment 100 includes a computing device 102, which is an example of an apparatus and that may be configured in a variety of ways.

For example, a computing device may be configured as a computer that is capable of communicating over a network, such as a desktop computer, a mobile station, an entertainment appliance, a set-top box communicatively coupled to a display device, a game console, and so forth. The computing device 102 may also be configured as a mobile communications device, such as an entertainment appliance, mobile phone, tablet computer, portable gaming or music device, and so forth. Thus, the computing device 102 may range from full resource devices with substantial memory and processor resources (e.g., personal computers, game consoles) to a low-resource device with limited memory and/or processing resources (e.g., traditional set-top boxes, hand-held music device). Additionally, although a single computing device 102 is shown, the computing device 102 may be representative of a plurality of different devices, such as an image capture device and a game console configured to capture gestures, and so on.

As shown in FIG. 1, the computing device 102 includes a housing 104 that assumes a mobile configuration. As such, the housing 104 may be configured to be held in one or more hands 106, 108 of a user. Disposed within the housing 104 is a radio device 110 that is configured to support wireless communication using a radio transmitter/receiver 112 and one or more antennas 114. A variety of different types of wireless communication may be supported, such as cellular (e.g., 3G, 4G, LTE, and so on), Wi-Fi (e.g., in compliance with one or more IEEE 802.11 standards), near-field communication (NFC), short range radio communication (e.g., Bluetooth), and so forth.

The computing device 102 is also illustrated as including a radio manager module 116. The radio manager module 116 is representative of functionality to manage operation of the radio device 110. For example, the radio manager module 116 may be configured to regulate operation of the radio device 110 in accordance with one or more standard absorption rate (SAR) considerations. The SAR considerations may be configured to address exposure of biological tissue (e.g., the user's hands 106, 108, a head of a user for a mobile phone consideration, and so forth) to energy emitted by the radio device 110, such as to transmit one or more wireless communications. The radio manager module 116 may base this management on a wide variety of information.

An example of information that may be provided to the radio manager module 116 is represented by an object detection module 118 and one or more object detection sensors 120. The object detection sensors 120 are configured to detect that an object is proximal to the sensors. This may include detecting a range, presence, relative direction, material composition, and so on that may be identified by the object detection module 118 from an output of the object detection sensors 120. To do this, the object detection sensors 120 may be configured in a variety of ways, such as one or more image sensors (e.g., cameras), acoustic sensors, magnetometers, capacitive sensors, and so on. An example of one such configuration is described as follows and shown in a corresponding figure.

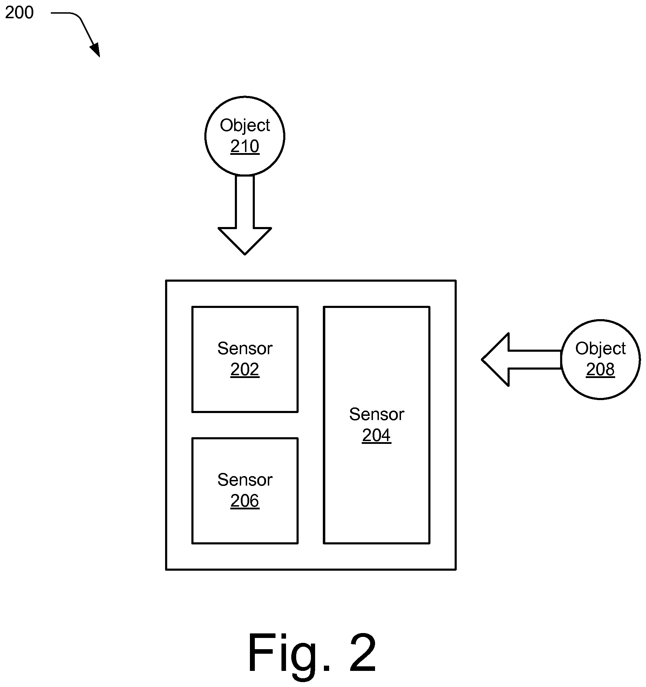

FIG. 2 depicts a system 200 in an example implementation in which an array of capacitive sensors are shown. In this example, sensors 202, 204, 206 are illustrated that are arranged in a generally coplanar relationship to each other. These sensors 202, 204, 206 may be arranged at a variety of different locations on the computing device 102 of FIG. 1, such as on the housing 104 adjacent to one or more antennas 114 of the radio device 110. As the antennas 114 may be located at a variety of different locations in relation to the housing 104, so too may the sensors 202, 204, 206 be located at a wide variety of locations on the housing 104, such as along a bezel, on a rear of the device, where the housing 104 is typically grasped by a user. Thus, in this example the sensors 202-206 are not included as part of touchscreen functionality of a display device of the computing device 102. Other examples as also contemplated, such as inclusion as part of the touchscreen functionality, e.g., as an image capture device using sensor-in-pixel functionality of the display device, capacitive sensors, and so on.

The sensors 202-206 are each configured in this example as capacitive sensors. As such, the sensors 202-206 may be utilized to detect a range of one or more objects 208, 210 in relation to the sensor. Thus, a combination of the sensors 202, 206, 208 may be utilized to determine a location of the objects 208, 210 with respect to the computing device 102. For example, comparison of outputs of sensors 202, 204 may be utilized to determine that object 208 is closer to sensor 204 and object 210 is closer to sensor 202.

Accordingly, the object detection module 118 may be utilized to detect presence of the objects, which may be utilized by the radio manager module 116 to manage an amount of energy emitted by the radio device 110. The management, for instance, may be utilized to decrease the amount of energy of the radio device 110 when the objects 208, 210 are within a predefined range and increase the amount of energy when the objects 208, 210 are not within the predefined range.

The sensors 202-206 may also be utilized to detect a likely material composition of the objects 208, 210. For example, the sensors 202-206 may be utilized to determine whether the objects 208, 210 are likely to contain biological (e.g., living) tissue. This may be performed in a variety of ways. The object detection module 118, for instance, may utilize a dielectric constant of the object 208, 210 and base the determination on whether that dielectric constant is consistent with biological tissue. In this way, capacitance changes detected by the sensors 202-206 may be utilized to determine a likely material composition of the objects 208, 210. The object detect module 118 may also include a fidgeting detector, which may base the determination on movement of the objects 208, 210, e.g., whether the objects 208, 210 are exhibiting "fidgeting" behavior as a human is likely to fidget in relation to the computing device 102.

Thus, the radio manager module 116 may also manage operation of the radio device 110 based on a likely material composition of an object that is disposed near the radio device 110. For instance, a determination of whether the objects 208, 210 likely include biological tissue may be used as a basis by the radio manager module 116 to determine whether to increase or decrease the amount of power of the radio device even if the objects 208, 210 are present. Thus, a range of the radio device 110 may be maintained even in the presence of the objects 208, 210 by determining that the objects 208, 210 are unlikely to contain biological tissue.

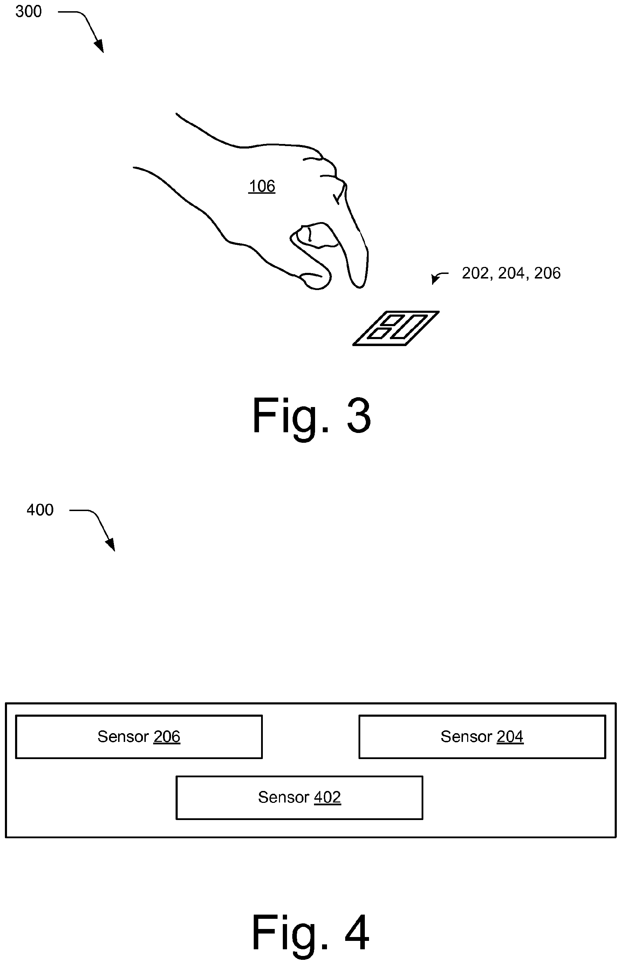

FIG. 3 depicts an example implementation 300 in which sensing of an object in three dimensions is shown. As previously described, the sensors 202, 204, 206 may be utilized to determine a range of an object, such as a user's hand 106, in relation to the sensors. Therefore, through arrangement of the sensors 202, 204, 206 and knowledge of the respective ranges, the object detection module 116 may determine a likely position of the object in three dimensions in relation to the sensors, and thus the computing device 102 and antennas 114 of the radio device 110.

In the discussion of FIGS. 2 and 3, a generally coplanar relationship of the sensors 202, 204, 206 is shown. This arrangement may be utilized to detect an object approaching from the side as shown in FIG. 2 as well as perpendicular to a plane of the sensors as shown by the user's hand 106 in the figure. This may be performed through comparison of outputs of the sensors 202-206 in relation to each other. Other arrangements of the sensors 202-206 are also contemplated, an example of which is described as follows and shown in a corresponding figure.

FIG. 4 depicts an example implementation 400 in which a layered arrangement of sensors is shown. In this example, sensors 204, 206 are included as before that assume a generally coplanar relationship to each other as defined along with sensor 202 of FIG. 3. Another sensor 402 is also included that is disposed along a different layer than a layer defined by sensors 204, 206. Although illustrated "beneath" a plane that includes the sensors 204, 206 in FIG. 4, sensor 402 may also be disposed "above" the sensors 204, 206.

A variety of different functionality may be supported through this arrangement. For example, sensing along three dimensions that is perpendicular to the plane defined by sensors 204, 206 may be improved through comparison of an output of sensor 402 with sensors 204, 206. In this way, accuracy of the object detection, and more specifically "where" an object is located in relation to the computing device 102 may be improved. For example, a distance may be the same for the sensors 202-206 that are located in the same plane and therefore sensor 402 may function to help disambiguate these inputs.

Although an array of three sensors was described in this example, it should be readily apparent that a wide variety of sizes, number, locations, and arrangements of the sensors is contemplated. For example, the sensors may be configured in a generally regular arrangement in relation to each other to form an array, e.g., a ten by ten array. Additionally, as sensing range is generally proportional to a long axis of the sensor (e.g., 1.5-2 times a size of the sensor), sizes of the sensors may be configured based on a desired sensing range, e.g., three millimeters across a long access of the sensor. In the above examples, management is performed by the radio manager module 116 in real time based on a current output of the sensors. A previous output of the sensors may also be leveraged by the radio manager module 116, an example of which is described as follows and shown in a corresponding figure.

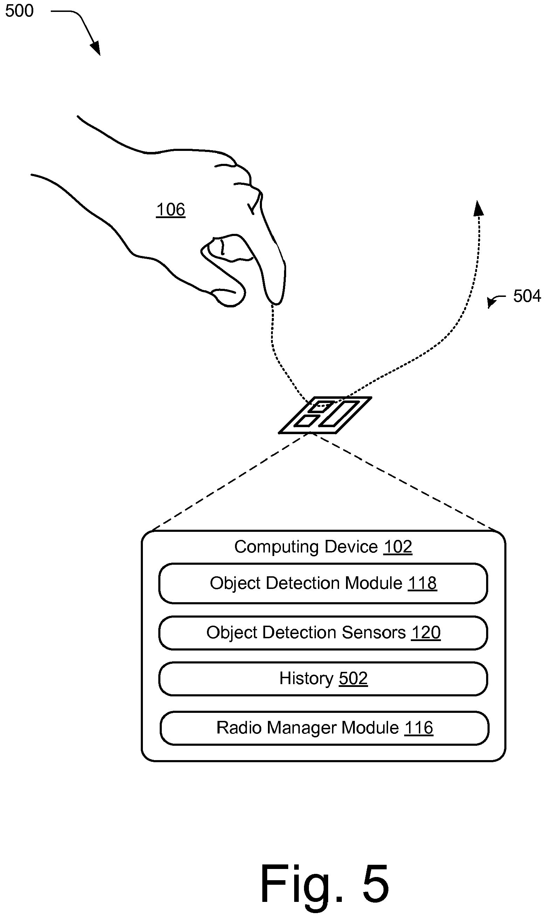

FIG. 5 depicts an example implementation 500 in which a history is generated that describes an output collected from one or more sensors. In this example, an object (e.g., a finger of a user's hand 106) is detected by object detection sensors 120 and processed by an object detection module 118 as before. In this instance, however, this detection is utilized to generate a history 502 describing values obtained from the sensors.

The history 502, for instance, may be utilized to describe a likely path 504 that the object (e.g., the user's hand 106) takes in relation to the computing device 102. The radio manager module 116 may then manage operation of the radio device 110 based on this history.

For example, the path 504 includes a portion that indicates that the object 106 is approaching the computing device 102. In response, the radio manager module 116 may decrease an amount of energy emitted by the radio device 110. On the other hand, the patch 504 also includes a portion that indicates that the object then moves away from the computing device 102 and thus an amount of energy that is permitted for emission by the radio device 110 may be increased by the radio manager module 116.

Although a path 504 was described in this example, a variety of other information may also be collected as part of the history 502. As described above, for instance, a determination may be made as to a likely material composition of the object, which may also be stored along with positional data described above. Additionally, the historical data may also be used to predict likely future positions of an object and/or computing device 102. Further, movement of the object was described in this example. Movement of the computing device 102 itself may also be leveraged by the radio manager module 116 to manage output of the radio device 110, an example of which is described as follows and shown in a corresponding figure.

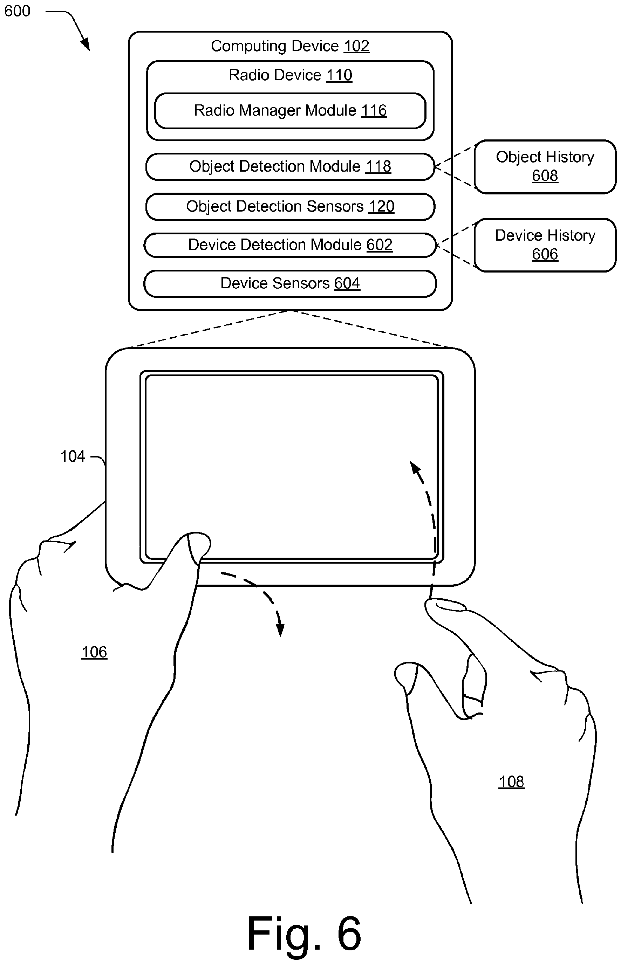

FIG. 6 depicts a system 600 in an example implementation in which movement of a computing device is also utilized to manage an amount of energy emitted by a radio device 110. As before, the computing device 102 includes an object detection module 118 and object detection sensors 120 to detect positioning of an object (e.g., an approaching finger of a user's hand 108) in relation to the computing device 102. This may be leveraged by the radio manager module 116 to manage an amount of energy emitted by the radio device 110.

The computing device 102 is also including a device detection module 602 and one or more device sensors 604 which are representative of functionality that is usable to determine a positioning of the computing device 102 in space. For example, the housing 104 of the computing device 102 may be grasped in a hand of a user 106. The device detection module 602 may receive an output of the device sensors 604 that is usable to determine a likely orientation of the computing device 102 in space. The device sensors 604 may take a variety of different forms, such as acoustic sensors (e.g., range finding), accelerometers, image capture devices, magnetometers, laser ranging devices, inertial sensors, and so forth.

Like before, this may be leveraged by the radio manager module 116 to manage operation of the radio device 110. The orientation, for instance, may be analyzed to determine if it is indicative of a likely orientation consistent with being held by a user outward for viewing, held up to a user's ear to talk, and so on as opposed to being placed on a surface, stowed in a user's briefcase, and so on. Thus, the amount of energy permitted for emission by the radio device 110 may be managed, at least in part, on a determination and even a strength of this determination, i.e., "how likely" this determination is correct.

A device history 606 may also be generated that describes a history of movement (or lack thereof) of the computing device 102, i.e., a history of the positioning of the computing device 102 in three dimensional space. As shown in FIG. 6, for instance, the housing 104 may be grasped in the user's hand 106 and moved toward the user. Thus, the device history 606 may describe this movement (i.e., path) of the computing device 102 as likely moving toward the user. The radio manager module 116 may then manage the amount of energy emitted by the radio device 110 as before.

Further, an object history 608 may also be generated as described in relation to FIG. 5 that describes location of an object in relation to the computing device 102. As shown in FIG. 6, for instance, the object detection sensors 120 may detect that the computing device 106 is being grasped by one of the user's hands 106 and moved toward the user and may also detect that the user's other hand 108 is moving toward the computing device 102. This movement is illustrated through the use of arrows in the figure.

Knowledge gained from the object history 608 may be utilized along with the device history 606 by the radio manager module 116 to manage the radio device 110. In this way, the radio manager module 116 may gain increased awareness of a likely location of the computing device 102 as well as objects located near the computing device in order to manage operation of the radio device 110. In this way, use of mobile communications devices may be addressed and managed accordingly, such as when grasped in a user's hand and held "out in front" of the user, as a mobile phone that is brought near to a user's ear, when placed in a pocket of the user, and so on.

For instance, range, direction and composition information of an object may be inferred by the object detection module 118 through outputs received by the object detection sensors 120. Additional dimensions of information may be added to improve accuracy. For example, an approach path described by the computing device as it moves towards an object may be described by the device history 606. This can be determined using available acceleration data from the device sensors 604 to describe the mobile device's path through space as it approaches an object. Thus, rather than being limited to sets of values at any instant in time, positions over time of the computing device 102 may be combined with sensor values over time from the object history 608 to obtain a rich data set usable to determine range, direction and material composition. Additionally, values from the sensors may be compared to support a variety of other functionality, such as to use a reading of temperature or humidity of the device sensors 604 to calibrate a capacitive sensor of the object detection sensors 120.

### Example Procedures

The following discussion describes object detection and characterization techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to FIGS. 1-6.

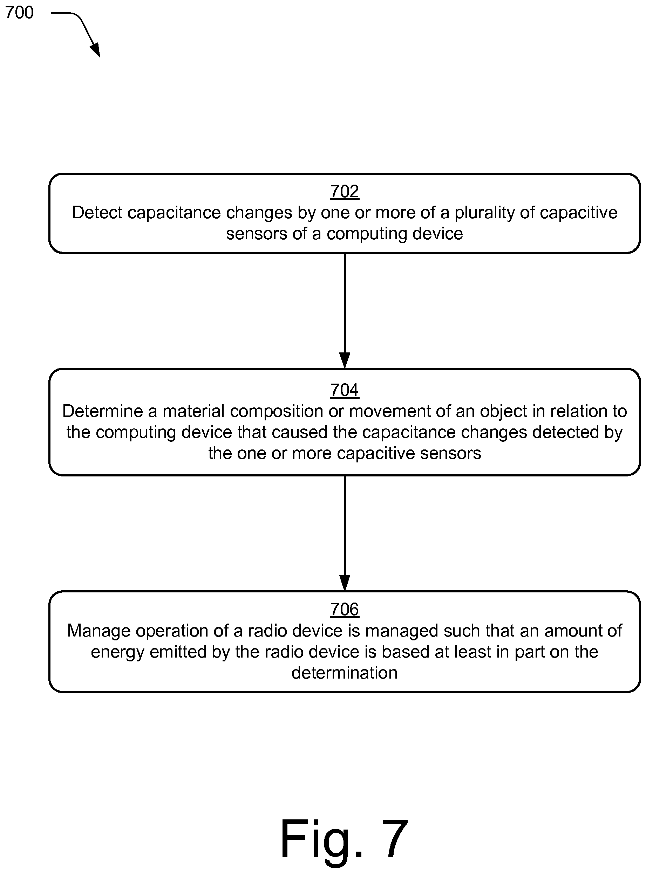

FIG. 7 depicts a procedure 700 in an example implementation in which an object detection is utilized to manage operation of a radio device. Capacitance changes are detected by one or more of a plurality of capacitive sensors of a computing device (block 702). The capacitive sensors, for instance, may be arranged as an array on part of a housing 104 of the computing device 102, e.g., disposed proximal to an antenna 114 of a radio device 110, proximal to where a user is likely to grasp the housing 104, and so on. The capacitive sensors may also be incorporated as part of touchscreen functionality of a display device of the computing device.

A material composition or movement of an object in relation to the computing device is determined that caused the capacitance changes detected by the one or more capacitive sensors (block 704). As previously described, this may be determined through a comparison of outputs of the plurality of capacitive sensors to determine range, direction, or material composition.

Operation of a radio device is managed such that an amount of energy emitted by the radio device is based at least in part on the determination (block 706). The operation may be performed in a variety of ways, such as to decrease the amount of energy when an object is near, when biological tissue is detected, and so forth.

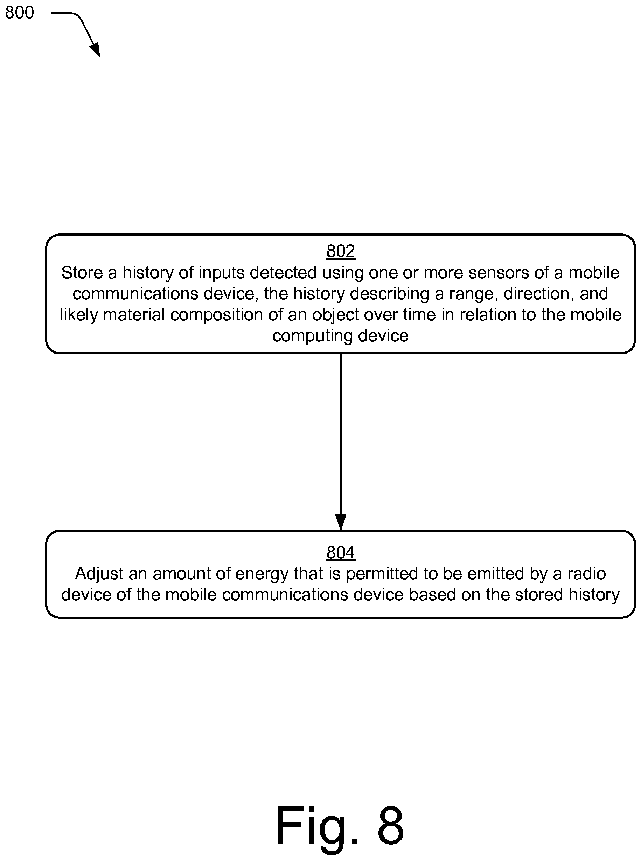

FIG. 8 depicts a procedure 800 in an example implementation in which a history of detected inputs is utilized to adjust an amount of energy emitted by a radio device of a mobile computing device. A history of inputs detected using one or more sensors of a mobile communications device is stored. The history describes a range, direction, and likely material composition of an object over time in relation to the mobile communications device (block 802). For example, an array of values captures from the sensors may be stored. The array may be utilized to describe these values of time as detected by the computing device.

An amount of energy that is permitted to be emitted by a radio device of the mobile communications device is adjusted based on the stored history (block 804). A radio manager module 116, for instance, may employ a plurality of different profiles that describe an amount of energy that is permitted for use in transmitting wireless data based on detection (or lack thereof) of an object. For example, the profiles may include values that are compared with the array to determine which of a plurality of antennas 114 of the radio device 110 is to be used, an amount of energy to be used by those antennas, and so on. A variety of other example are also contemplated without departing from the scope thereof.

### Example System and Device

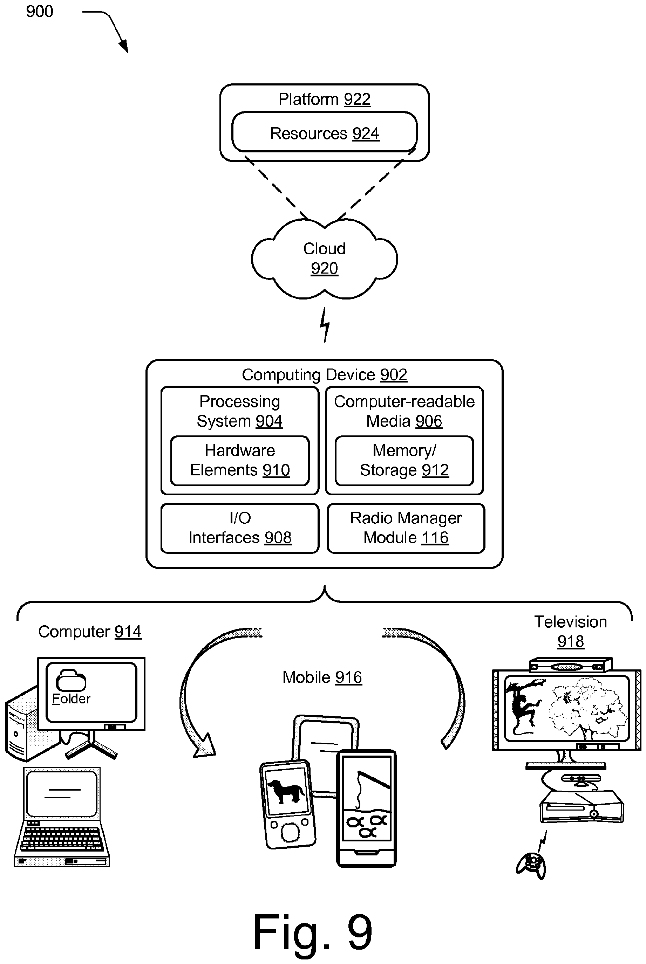

FIG. 9 illustrates an example system generally at 900 that includes an example computing device 902 that is representative of one or more computing systems and/or devices that may implement the various techniques described herein, as illustrated through inclusion of the radio manger module 116. The computing device 902 may be, for example, a server of a service provider, a device associated with a client (e.g., a client device), an on-chip system, and/or any other suitable computing device or computing system.

The example computing device 902 as illustrated includes a processing system 904, one or more computer-readable media 906, and one or more I/O interface 908 that are communicatively coupled, one to another. Although not shown, the computing device 902 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 904 is representative of functionality to perform one or more operations using hardware. Accordingly, the processing system 904 is illustrated as including hardware element 910 that may be configured as processors, functional blocks, and so forth. This may include implementation in hardware as an application specific integrated circuit or other logic device formed using one or more semiconductors. The hardware elements 910 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 906 is illustrated as including memory/storage 912. The memory/storage 912 represents memory/storage capacity associated with one or more computer-readable media. The memory/storage component 912 may include volatile media (such as random access memory (RAM)) and/or nonvolatile media (such as read only memory (ROM), Flash memory, optical disks, magnetic disks, and so forth). The memory/storage component 912 may include fixed media (e.g., RAM, ROM, a fixed hard drive, and so on) as well as removable media (e.g., Flash memory, a removable hard drive, an optical disc, and so forth). The computer-readable media 906 may be configured in a variety of other ways as further described below.

Input/output interface(s) 908 are representative of functionality to allow a user to enter commands and information to computing device 902, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 902 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 902. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 902, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 910 and computer-readable media 906 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 910. The computing device 902 may be configured to implement particular instructions and/or functions corresponding to the software and/or hardware modules. Accordingly, implementation of a module that is executable by the computing device 902 as software may be achieved at least partially in hardware, e.g., through use of computer-readable storage media and/or hardware elements 910 of the processing system 904. The instructions and/or functions may be executable/operable by one or more articles of manufacture (for example, one or more computing devices 902 and/or processing systems 904) to implement techniques, modules, and examples described herein.

As further illustrated in FIG. 9, the example system 900 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 900, multiple devices are interconnected through a central computing device. The central computing device may be local to the multiple devices or may be located remotely from the multiple devices. In one comparative example outside the scope of the invention as claimed, the central computing device may be a cloud of one or more server computers that are connected to the multiple devices through a network, the Internet, or other data communication link.

In another comparative example outside the scope of the invention as claimed, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In a further comparative example outside the scope of the invention as claimed, a class of target devices is created and experiences are tailored to the generic class of devices. A class of devices may be defined by physical features, types of usage, or other common characteristics of the devices.

In various implementations, the computing device 902 may assume a variety of different configurations, such as for computer 914, mobile 916, and television 918 uses. Each of these configurations includes devices that may have generally different constructs and capabilities, and thus the computing device 902 may be configured according to one or more of the different device classes. For instance, the computing device 902 may be implemented as the computer 914 class of a device that includes a personal computer, desktop computer, a multi-screen computer, laptop computer, netbook, and so on.

The computing device 902 may also be implemented as the mobile 916 class of device that includes mobile devices, such as a mobile phone, portable music player, portable gaming device, a tablet computer, a multi-screen computer, and so on. The computing device 902 may also be implemented as the television 918 class of device that includes devices having or connected to generally larger screens in casual viewing environments. These devices include televisions, set-top boxes, gaming consoles, and so on.

The techniques described herein may be supported by these various configurations of the computing device 902 and are not limited to the specific examples of the techniques described herein. This functionality may also be implemented all or in part through use of a distributed system, such as over a "cloud" 920 via a platform 922 as described below.

The cloud 920 includes and/or is representative of a platform 922 for resources 924. The platform 922 abstracts underlying functionality of hardware (e.g., servers) and software resources of the cloud 920. The resources 924 may include applications and/or data that can be utilized while computer processing is executed on servers that are remote from the computing device 902. Resources 924 can also include services provided over the Internet and/or through a subscriber network, such as a cellular or Wi-Fi network.

The platform 922 may abstract resources and functions to connect the computing device 902 with other computing devices. The platform 922 may also serve to abstract scaling of resources to provide a corresponding level of scale to encountered demand for the resources 924 that are implemented via the platform 922. Accordingly, in an interconnected device of another comparative example outside the scope of the invention as claimed, implementation of functionality described herein may be distributed throughout the system 900. For example, the functionality may be implemented in part on the computing device 902 as well as via the platform 922 that abstracts the functionality of the cloud 920.

### Conclusion

Although the invention has been described in language specific to structural features and/or methodological acts, it is to be understood that the invention defined in the appended claims is not necessarily limited to the specific features or acts described. Rather, the specific features and acts are disclosed as example forms of implementing the claimed invention.

## Claims

1. A method comprising
detecting (702) capacitance changes by one or more of a plurality of capacitive sensors (120, 202, 204, 206) of a computing device (102);
determining (704) a material composition or movement of an object (208, 210) in relation to the computing device that caused the capacitance changes detected by the one or more of the plurality of capacitive sensors (120, 202, 204, 206) through a comparison of outputs of the one or more of the plurality of capacitive sensors (120, 202, 204, 206);
storing a history of a plurality of the detected capacitance changes over time and wherein the determining (704) is based at least in part on the stored history;
utilizing the history of inputs collected by the one or more of the plurality of capacitive sensors (120, 202, 204, 206), to describe a likely path (504) that the object (208, 210) takes in relation to the computing device (102); and
managing (706) operation of a radio device (110) of the computing device (102) such that an amount of energy emitted by the radio device (110) is based at least in part on the determining (704).

2. A method as described in claim 1, wherein the determining (704) includes determining a range of the object (208,210) with respect to the one or more of the plurality of capacitive sensors (120, 202, 204, 206).

3. A method as described in claim 1, wherein the determining (704) of the material composition includes determining whether the object (208, 210) includes biological tissue.

4. A method as described in claim 1, wherein the one or more of the plurality of capacitive sensors (202, 204, 206) includes at least one sensor that is not included as part of a touchscreen functionality of the computing device (102).

5. A method as described in claim 1, wherein two or more of the plurality of capacitive sensors (202, 204, 206) are coplanar.

6. A method as described in claim 5, wherein at least one additional capacitive sensor (402) is disposed on a different plane than that of the two or more capacitive sensors (202, 204, 206).

7. A method as described in claim 1, wherein the one or more of the plurality of capacitive sensors (202, 204, 206) are arranged in an array.

8. A method as described in claim 1, comprising utilizing a combination of the one or more of the plurality of capacitive sensors (202, 204, 206) to determine a location of the object (208, 210) with respect to the computing device (102).

9. A mobile communications device (102) comprising:
a housing configured to be held by one or more hands of a user;
a radio device (110) disposed within the housing and configured to transmit and receive one or more radio frequencies;
one or more sensors (604) disposed within the housing and configured to detect positioning of the mobile communications device (102) in space;
one or more of a plurality of capacitive sensors (120, 202, 204, 206) disposed on the housing and configured to generate capacitance information including detection of an object (208, 210); and
one or more modules (116, 118, 602) disposed within the housing and implemented at least partially in hardware, the one or more modules (116, 118, 602) configured to manage operation of the radio device (110) based on:
the positioning of the mobile communications device in space detected by the one or more sensors (604); and
a history of the inputs collected by the one or more capacitive sensors (120, 202, 204, 206) over time;
and a radio manager module (116) to manage an amount of energy emitted by the radio device (110) using the history of the inputs, wherein the history of inputs is further utilized to describe a likely path (504) that an object (208, 210) takes in relation to the mobile communication device (102).

## Patentansprüche

1. Verfahren, aufweisend:
Erfassen (702) von Kapazitätsänderungen durch einen oder mehrere einer Mehrzahl von Kapazitätssensoren (120, 202, 204, 206) einer Rechenvorrichtung (102);
Bestimmen (704) einer Materialzusammensetzung oder Bewegung eines Objektes (208, 210) im Verhältnis zur Rechenvorrichtung, die die Kapazitätsänderungen, die durch den einen oder die mehreren der Mehrzahl von Kapazitätssensoren (120, 202, 204, 206) erfasst wurden, bewirkt hat, durch einen Vergleich von Ausgängen von dem einen oder den mehreren der Mehrzahl von Kapazitätssensoren (120, 202, 204, 206);
Speichern einer Historie einer Mehrzahl der erfassten Kapazitätsänderungen im Verlauf der Zeit und wobei das Bestimmen (704) zumindest teilweise auf der gespeicherten Historie basiert;
Verwenden der Historie von Eingängen, die durch den einen oder die mehreren der Mehrzahl von Kapazitätssensoren (120, 202, 204, 206) gesammelt wurden, um einen wahrscheinlichen Weg (504) zu beschreiben, den das Objekt (208, 210) im Verhältnis zur Rechenvorrichtung (102) nimmt; und
Verwalten (706) eines Betriebs einer Funkvorrichtung (110) der Rechenvorrichtung (102), sodass eine Energiemenge, die durch die Funkvorrichtung (110) ausgesendet wird, zumindest teilweise auf dem Bestimmen (704) basiert.

2. Verfahren nach Anspruch 1, wobei das Bestimmen (704) ein Bestimmen eines Bereichs des Objekts (208, 210) im Verhältnis zu dem einen oder den mehreren der Mehrzahl von Kapazitätssensoren (120, 202, 204, 206) aufweist.

3. Verfahren nach Anspruch 1, wobei das Bestimmen (704) der Materialzusammensetzung ein Bestimmen aufweist, ob das Objekt (208, 210) biologisches Gewebe aufweist.

4. Verfahren nach Anspruch 1, wobei der eine oder die mehreren der Mehrzahl von Kapazitätssensoren (120, 202, 204, 206) zumindest einen Sensor aufweist, der nicht als Teil einer Berührungsbildschirmfunktionalität der Rechenvorrichtung (102) enthalten ist.

5. Verfahren nach Anspruch 1, wobei zwei oder mehrere der Mehrzahl von Kapazitätssensoren (202, 204, 206) koplanar sind.

6. Verfahren nach Anspruch 5, wobei zumindest ein zusätzlicher Kapazitätssensor (402) auf einer anderen Ebene angeordnet ist, als die zwei oder mehreren Kapazitätssensoren (202, 204, 206).

7. Verfahren nach Anspruch 1, wobei der eine oder die mehreren der Mehrzahl von Kapazitätssensoren (202, 204, 206) in einem Array angeordnet sind.

8. Verfahren nach Anspruch 1, aufweisend ein Verwenden einer Kombination von dem Einen oder den Mehreren der Mehrzahl von Kapazitätssensoren (202, 204, 206), um einen Ort des Objekts (208, 210) im Verhältnis zur Rechenvorrichtung (102) zu bestimmen.

9. Mobile Kommunikationsvorrichtung (102), aufweisend:
ein Gehäuse, das konfiguriert ist, um von einer oder mehreren Händen eines Nutzers gehalten zu werden;
eine Funkvorrichtung (110), die im Gehäuse angeordnet und konfiguriert ist, um eine oder mehrere Funkfrequenzen zu senden und zu empfangen;
einen oder mehrere Sensoren (604), die im Gehäuse angeordnet und konfiguriert sind, um ein Positionieren der mobilen Kommunikationsvorrichtung (102) im Raum zu erfassen;
einen oder mehrere einer Mehrzahl von Kapazitätssensoren (120, 202, 204, 206), die auf dem Gehäuse angeordnet und konfiguriert sind, um Kapazitätsinformation zu erzeugen, umfassend eine Erfassung eines Objekts (208, 210); und
ein oder mehrere Module (116, 118, 602), die im Gehäuse angeordnet und zumindest teilweise als Hardware ausgeführt sind, wobei das eine oder die mehreren Module (116, 118, 602) konfiguriert sind, um einen Betrieb der Funkvorrichtung (110) zu verwalten, basierend auf:
dem Positionieren der mobilen Kommunikationsvorrichtung im Raum, erfasst durch den einen oder die mehreren Sensoren (604); und
einer Historie der Eingänge, die durch den einen oder die mehreren Kapazitätssensoren (120, 202, 204, 206) im Verlauf der Zeit gesammelt wurde;
und einem Funk-Manager-Modul (116), um eine Energiemenge zu verwalten, die durch die Funkvorrichtung (110) emittiert wird, unter Verwendung der Historie von Eingängen, wobei die Historie von Eingängen weiter verwendet wird, um einen wahrscheinlichen Weg (504) zu beschreiben, den ein Objekt (208, 210) im Verhältnis zur mobilen Kommunikationsvorrichtung (102) nimmt.

## Revendications

1. Procédé, comprenant
la détection (702) de variations de capacité par un ou plusieurs d'une pluralité de capteurs capacitifs (120, 202, 204, 206) d'un dispositif de calcul (102) ;
la détermination (704) d'une composition de matériau ou du mouvement d'un objet (208, 210) en liaison avec le dispositif de calcul ayant provoqué les variations de capacité détectées par le ou plusieurs de la pluralité de capteurs capacitifs (120, 202, 204, 206) par le biais d'une comparaison de sorties du ou de plusieurs de la pluralité de capteurs capacitifs (120, 202, 204, 206) ;
l'enregistrement d'un historique d'une pluralité des variations de capacité au fil du temps et dans lequel la détermination (704) est basée au moins partiellement sur l'historique enregistré ;
l'utilisation de l'historique d'entrées collectées par le ou plusieurs de la pluralité de capteurs capacitifs (120, 202, 204, 206) pour décrire un trajet (504) probable suivi par l'objet (208, 210) en liaison avec le dispositif de calcul (102) ; et
la gestion (706) du fonctionnement d'un dispositif radio (110) du dispositif de calcul (102) de sorte qu'une quantité d'énergie émise par le dispositif radio (110) est basée au moins partiellement sur la détermination (704).

2. Procédé selon la revendication 1, dans lequel la détermination (704) inclut la détermination d'une distance de l'objet (208, 210) par rapport à l'un ou à plusieurs de la pluralité de capteurs capacitifs (120, 202, 204, 206).

3. Procédé selon la revendication 1, dans lequel la détermination (704) de la composition du matériau inclut la détermination indiquant si l'objet (208, 210) inclut du tissu biologique.

4. Procédé selon la revendication 1, dans lequel l'un ou plusieurs de la pluralité de capteurs capacitifs (202, 204, 206) inclut au moins un capteur qui n'est pas inclus en tant que partie d'une fonctionnalité d'écran tactile du dispositif de calcul (102).

5. Procédé selon la revendication 1, dans lequel deux ou plusieurs de la pluralité de capteurs capacitifs (202, 204, 206) sont coplanaires.

6. Procédé selon la revendication 5, dans lequel au moins un capteur capacitif (402) supplémentaire est disposé sur un plan différent de celui des deux capteurs capacitifs (202, 204, 206) ou davantage.

7. Procédé selon la revendication 1, dans lequel le ou plusieurs de la pluralité de capteurs capacitifs (202, 204, 206) sont agencés en un groupement.

8. Procédé selon la revendication 1, comprenant l'utilisation d'une combinaison de l'un ou de plusieurs de la pluralité de capteurs capacitifs (202, 204, 206) pour déterminer un emplacement de l'objet (208, 210) par rapport au dispositif de calcul (102).

9. Dispositif de communication mobile (102), comprenant
un boîtier configuré pour être tenu par une main d'un utilisateur ou davantage ;
un dispositif radio (110) disposé à l'intérieur du boîtier et configuré pour émettre et recevoir une ou plusieurs fréquences radio ;
un ou plusieurs capteurs (604) disposés à l'intérieur du boîtier et configurés pour détecter le positionnement du dispositif de communication mobile (102) dans l'espace ;
un ou plusieurs d'une pluralité de capteurs capacitifs (120, 202, 204, 206) disposés sur le boîtier et configurés pour générer des informations de capacité incluant la détection d'un objet (208, 210) ;
et
un ou plusieurs modules (116, 118, 602) disposés à l'intérieur du boîtier et mis en oeuvres au moins partiellement dans du matériel, le ou plusieurs modules (116, 118, 602) étant configurés pour gérer le fonctionnement du dispositif radio (110) sur la base de :
le positionnement du dispositif de communication mobile dans l'espace détecté par le ou plusieurs capteurs (604) ; et
un historique des entrées collectées par le ou plusieurs capteurs capacitifs (120, 202, 204, 206) au fil du temps ;
et un module de gestionnaire radio (116) pour gérer une quantité d'énergie émise par le dispositif radio (110) à l'aide de l'historique des entrées, dans lequel l'historique d'entrées est également utilisé pour décrire un trajet (504) probable suivi par un objet (208, 210) en liaison avec le dispositif de communication mobile (102).
